# EUROPÄISCHE PATENTSCHRIFT

(11) **EP 1 595 581 B1**
(45) Veröffentlichungstag und Bekanntmachung des Hinweises auf die Patenterteilung: **29.11.2006**
(21) Anmeldenummer: 05006540.8
(22) Anmeldetag: 24.03.2005
(51) Int. Cl.: A63B 55/08

(54) **Golfcaddy**
Golf Cart
Chariot de golf

(30) Priorität: 14.05.2004 DE 102004024108
(43) Veröffentlichungstag der Anmeldung: 16.11.2005
(73) Patentinhaber: InvenComm GmbH, 8942 Oberrieden (CH)
(72) Erfinder: Dibke, Thomas, 8942 Oberrieden (CH)
(74) Vertreter: Söllner, Udo

(56) Entgegenhaltungen:
- FR-A- 2 736 839
- FR-A- 2 811 236
- US-A- 5 074 576

## Beschreibung

Die vorliegende Erfindung betrifft einen Golfcaddy.

Golfschläger werden sowohl zum Transport vom und zum Platz als auch auf dem Golfplatz selber in im wesentlichen zylindrischen Taschen, sogenannten Golfbags transportiert. Aufgrund des erheblichen Gewichts der Golfbags inklusive der Schläger und weiterer Ausrüstung ist es üblich, diese auf Karrenwagen, sogenannten Golfcaddies zu transportieren.

Dabei sind zum einen manuell betriebene Caddies bekannt, die im wesentlichen aus einem Rahmen, auf dem der Golfbag lösbar befestigt ist, einem Griff zum Schieben oder Ziehen des Caddies sowie zwei seitlich angebrachten Rädern bestehen. Rahmen und Räder sind dabei so ausgebildet, dass der Caddy samt darauf befestigten Bag in einer Schräglage stabil steht und sich dabei auf beide Räder sowie eine untere Kante des Caddies abstützt. Durch Vergrößern der Schräglage löst sich die untere Kante vom Boden und der Caddy kann, auf den Rädern rollend, gezogen bzw. geschoben werden. Im Folgenden wird ohne Beschränkung der Allgemeinheit exemplarisch ein Ziehen des Caddies betrachtet, die Überlegungen treffen für ein Schieben analog zu.

Solche Caddies müssen, um den hohen statischen und dynamischen Beanspruchungen durch das Gewicht von Golfbag, Schlägern und Ausrüstung im Stand bzw. Bewegung standzuhalten, sehr stabil ausgeführt sein. Üblich sind hier Caddies mit relativ massiven Rohrkonstruktionen aus Stahl, Aluminiumlegierungen oder auch Titanlegierungen. Diese sind aufgrund des verwendeten Materials und ihres Aufbaus relativ schwer, was das Ziehen - vor allem bergauf - zusätzlich erschwert und überdies beim Transport der Caddies (etwa als Fluggepäck im Urlaub) nachteilig ist.

Insbesondere beim Transport des Bags vom und zum Platz (beispielsweise als Fluggepäck im Urlaub) weisen herkömmliche Caddies des weiteren den Nachteil auf, dass zunächst der Bag vom Caddy entfernt, dieser dann in mehrere Teile zerlegt sowie am Zielort zunächst wieder zusammengebaut werden muss, bevor der Bag abschließend wieder befestigt wird. Dabei können nicht nur Einzelteile des zerlegten Caddies verloren gehen, es ist auch nicht möglich, ihn - etwa am Flughafen - ohne großen Aufwand kurzzeitig am Bag zu befestigen, um diesen zu transportieren.

Das Dokument FR-A-2 881 236 offenbart einen Golfcaddy mit einem Rahmen der umfasst:
eine Bagauflage, einen Achshalter mit einer Achsvorrichtung, eine Stütze und einen Griff wobei der Achshalter und die Stütze an der Bagauflage drehbar derart befestigt sind, dass sie aus einer Ruhestellung, in der Achshalter, Stütze und Bagauflage im wesentlichen parallel liegen, in eine Fahrstellung klappbar sind, in der Achshalter, Stütze und ein Teil
der Bagauflage im wesentlichen ein Dreieck bilden, und die Achsvorrichtung in wesentlichen senkrecht zu dem Achshalter steht und durch die Stütze gestützt wird.

Beim Zusammenklappen wird die Achsvorrichtung zusammen mit den Rädern abgebaut.

Des weiteren sind elektrisch betriebene Caddies bekannt. Diese gleichen im Aufbau im wesentlichen den oben beschriebenen manuell betriebenen Caddies, wobei ihre Räder auf einer Achse festgelegt sind, die von einem Elektromotor angetrieben wird. Aufgrund des Elektromotors samt zugehörigem Akkumulator und der noch massiveren Ausführung sind solche Caddies kaum über weitere Strecken transportabel, etwa als Fluggepäck. Ein Spieler muss sich also vor Ort einen anderen Caddy leihen oder auf einen zerlegbaren manuell angetriebenen Caddy ausweichen.

Aufgabe der vorliegenden Erfindung ist es, einen Golfcaddy zu schaffen, der die oben genannten Nachteile vermeidet.

Diese Aufgabe wird durch den Gegenstand des Anspruchs 1 gelöst.

Erfindungsgemäß umfasst ein Golfcaddy einen Rahmen mit einer Bagauflage, einem Achshalter mit einer Achsvorrichtung, einer Stütze und einem Griff, wobei der Achshalter und die Stütze an der Bagauflage und die Achsvorrichtung an dem Achshalter drehbar derart befestigt sind, dass sie aus einer Ruhestellung, in der Achshalter, Stütze, Achsvorrichtung und Bagauflage im wesentlichen parallel liegen, in eine Fahrstellung klappbar sind, in der Achshalter, Stütze und ein Teil der Bagauflage im wesentlichen ein Dreieck bilden, und die Achsvorrichtung in wesentlichen senkrecht zu dem Achshalter steht und durch die Stütze gestützt wird.

Hierdurch ist es vorteilhaft möglich, den Golfcaddy auch während des Transports in der Ruhestellung am Golfbag zu belassen. Aufgrund des erfindungsgemäßen Aufbaus faltet sich der Golfcaddy hierbei kompakt zusammen und ragt nur wenig über die Abmessungen des Golfbags hinaus. Gleichzeitig kann er rasch in die Fahrstellung gebracht werden, um den Bag auch auf dem Transport zu bewegen.

Dadurch, dass bis auf die Räder alle Teile am Caddy verbleiben, sind diese gegen Verlust gesichert und können leicht transportiert werden.

Gleichzeitig ist der Golfcaddy in seiner Fahrtstellung durch die Dreiecksform statisch und dynamisch hochstabil, was es ermöglicht, die Einzelteile entsprechend dünnwandig bzw. klein dimensioniert und damit leicht auszubilden.

Vorteilhafterweise umfasst die Bagauflage Abstandshalter, die so ausgebildet sind, dass an ihnen ein Bag so befestigbar ist, dass Achshalter, Stütze und Achsvorrichtung in die Ruhestellung bringbar sind, während der Bag an der Bagauflage befestigt ist. Hierdurch wird der zum Einklappen der Stütze und des Achshalters notwendige Raum geschaffen.

Bevorzugt umfasst die Stütze wenigstens ein Stützelement, an dem die Achsvorrichtung befestigbar ist. Hierdurch wird die Stabilität des Dreiecks erhöht. Die Befestigung kann beispielsweise über Magnete, Federn, Schrauben, Clipse oder dergleichen erfolgen.

Vorteilhafterweise ist die Achsvorrichtung lösbar an dem Achshalter befestigt. Dies ermöglicht den Austausch gegen andere Achsvorrichtungen, etwa unterschiedlicher Breite für unterschiedliche Gelände, da die Kippstabilität mit dem Radabstand wächst.

Besonders bevorzugt umfasst die Achsvorrichtung wenigstens einen Elektromotor zum Antreiben einer Welle und eine Steuereinheit für den Motor. Ist die Achsvorrichtung lösbar, so kann mit geringem Aufwand ein manuell betriebener Caddy (Achsvorrichtung ohne Motor) zu einem Elektrocaddy (Achsvorrichtung mit Motor) hoch- bzw. zurückgerüstet werden. Hierdurch ist es möglich, die motorische Achsvorrichtung etwa später hinzuzukaufen oder für den Transport gegen eine leichtere manuelle auszutauschen.

Vorteilhafterweise umfasst die Achsvorrichtung zwei Elektromotoren zum Antreiben von zwei Wellen und eine Steuereinheit für beide Motoren. Hierdurch wird nicht nur die Last des einzelnen Motors so verringert, dass kleinere und damit leichtere Motoren mit geringerer Wärmeentwicklung und geringerem Stromverbruch eingesetzt werden können, sondern es ist durch unterschiedliche Geschwindigkeiten auch ein Kurvenfahren möglich.

Besonders bevorzugt ist die Achsvorrichtung auf dem Achshalter in der Ruhe- und/oder Fahrstellung drehfest arretierbar ist, beispielsweise über ein Rastgelenk, eine lösbar Arretierung, Reibschluss oder dergleichen. Hierdurch wird die Ruhestellung leichter handhabbar und/oder die Stabilität des Dreiecks erhöht.

Besonders bevorzugt sind Bagauflage, Achshalter, Stütze und/oder Achsvorrichtung wenigstens teilweise aus Carbon und/oder Aluminium gefertigt. Dies ist aufgrund der stabilen Fahrstellung in Dreiecksform und der gelenkigen Verbindung der Teile untereinander möglich und reduziert das Gewicht enorm, so dass der erfindungsgemäße Caddy zu den leichtesten weltweit bekannten Caddies zählt. Gegenüber Metallen weist Carbon zudem den Vorteil höherer Elastizität und Dämpfung auf, was unangenehme Schwingungen während des Betriebs reduziert.

Weitere Aufgaben, Merkmale und Vorteile der vorliegenden Erfindung ergeben sich aus den Unteransprüchen und den nachfolgend beschriebenen Ausführungsformen. Hierzu zeigt:
Fig. 1 einen erfindungsgemäßen Golfcaddy im Fahrzustand in der Seitansicht mit darauf befestigtem Golfbag;
Fig. 2 den Golfcaddy nach Fig. 1 in der Vorderansicht ohne Golfbag; und
Fig. 3 den Golfcaddy nach Fig. 1 im Ruhe- oder Transportzustand.

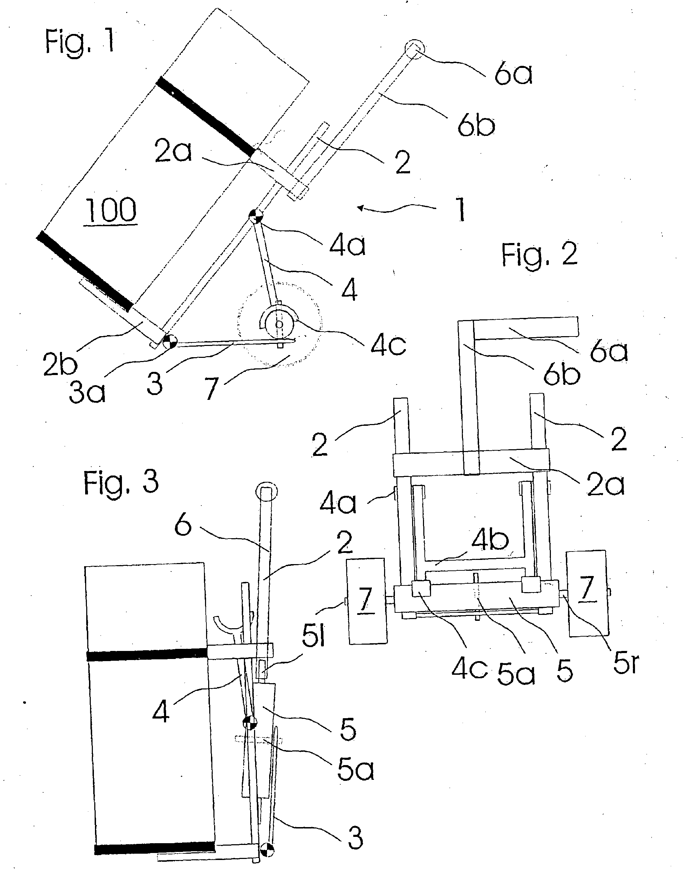

Ein Golfcaddy nach einer ersten Ausführung der vorliegenden Erfindung umfasst einen Rahmen 1, auf dem in Fig. 1, 3 exemplarisch ein Bag 100 in bekannter Weise, etwa durch Riemen befestigt ist. Dieser Rahmen umfasst eine Bagauflage 2, an der ein Achshalter 3 und eine Stütze 4 jeweils drehbar befestigt sind. Dies ist in Fig. 1 durch die Drehgelenke 3a bzw. 4a gekennzeichnet, wobei in Fig. 2 das Drehgelenk 4a der Stütze durch zwei Bolzen schematisch angedeutet ist.

In der hier dargestellten bevorzugten Ausführungsform umfasst die Bagauflage 2 zwei parallele Rohre aus Carbon, welche durch zwei hierzu senkrechte parallele Abstandshalter 2a, 2b beabstandet sind, die vorzugsweise ebenfalls aus Carbon gefertigt sind. Rohre und Abstandshalter können in bekannter Weise durch Form- und/oder Reibschluss miteinander verbunden, miteinander verklebt oder einstückig ausgebildet sein. Im dargestellten Ausführungsbeispiel sind die Rohre durch entsprechende Bohrungen der Abstandshalter 2a, 2b reibschlüssig gesteckt, wobei die Abstandshalter hierzu Muffen aus Aluminium aufweisen.

Vorteilhafterweise sind die beiden Abstandshalter 2a, 2b so ausgebildet, dass sie auf ihrer einen, dem Achshalter 3 abgewandten Seite den Bag 100 abstützen und dieser mittels Riemen an ihnen axial festgelegt werden kann. Bevorzugt weist dabei der untere der beiden Abstandshalter 2b eine Auflage auf, auf der sich der Bag 100 axial abstützt.

Der Achshalter 3 ist an der Bagauflage 2 in der Nähe von deren unterem Ende, vorteilhafterweise am unteren Abstandshalter 2b, drehbar befestigt, so dass er aus einer im wesentlichen zu der Bagauflage parallelen Ruhestellung, die in Fig. 3 dargestellt ist, in eine Fahrstellung klappen kann, in der Bagauflage 2 und Achshalter 3 einen spitzen Winkel bilden. Da der Achshalter im wesentlichen in seiner axialen Richtung auf Zug beansprucht wird, kann er relativ dünn und damit leicht ausgeführt sein, etwa in Form eines flachen, schmalen Balkens und/oder aus Carbon gefertigt. Vorteilhafterweise kann der Achshalter durch ein Federelement (nicht dargestellt) in seine Ruheposition zurückgestellt werden.

An seinem anderen, der Bagauflage 2 abgewandten Ende ist an dem Achshalter 3 eine Achsvorrichtung 5 drehbar so befestigt, dass sie aus einer im wesentlichen zu dem Achshalter 3 parallelen Ruhestellung (Fig. 3) in eine zu Achshalter 3 und Bagauflage 2 senkrechten Fahrstellung (Fig. 2) und zurück bewegt werden kann. Dies ist in den Figuren durch eine Drehachse 5a angedeutet. Vorteilhafterweise kann die Achsvorrichtung 5 in der Ruhe- und/oder Fahrstellung arretierbar sein, indem beispielsweise die Drehachse 5a eine Rastverbindung umfasst.

Die Achsvorrichtung 5 umfasst in der hier dargestellten Ausführung ein rechte bzw. linke Achse 5r bzw. 5l, auf der in der Fahrposition (Fig. 1, 2) jeweils ein Rad 7 lösbar befestigt ist. In der Ruheposition sind die Räder 7 von den Achsen 5r, 5l entfernt (Fig. 3). Die lösbare Befestigung der Räder an den Achsen kann in an sich bekannter Weise erfolgen, beispielsweise durch reibschlüssiges Einstecken der Achsen in die Räder, Verschrauben senkrecht zur Achse, Aufstecken, eine Clip-Verbindung oder in einer bevorzugten Ausführung dadurch, dass die Achse 5r bzw. 5l in eine entsprechende Bohrung im Rad 7 eingreift, wobei senkrecht außermittig zu dieser Bohrung eine zweite Bohrung in Rad und Achse vorhanden, so dass im zusammengesetzten Zustand ein Stift in diese Bohrung eingesetzt werden kann und das Rad axial auf der Achse 5r bzw. 51 festlegt. Der Stift kann durch ein Federelement vorgespannt sein, so dass er gegen die Kraft dieses Federelements aus seiner Ruhestellung bewegt werden kann, wodurch das Rad von der Achse gezogen werden kann.

Je nach Befestigungsart kann sich das Rad auf der Achse und/oder die Achse (dann als Welle) in der Achsvorrichtung 5 drehen. Gleichermaßen kann statt zwei Achsen 5r, 5l auch eine durchgängige Achse verwendet werden.

Die Stütze 4 umfasst in der hier dargestellten Ausführung zwei Rohre, die jeweils in einer zu der durch die beiden Rohre der Bagauflage 2 gebildeten Ebene senkrechten Ebene drehbar sind. Beide Rohre sind mittels eines Quersteges 4b miteinander verbunden. Auch die Rohre und der Quersteg der Stütze 4 können in bekannter Weise durch Form- und/oder Reibschluss miteinander verbunden, miteinander verklebt oder einstückig ausgebildet sein. In einer bevorzugten Ausführung sind die Rohre und der Quersteg aus Carbon gefertigt und mittels Aluminiummuffen miteinander verbunden. In der hier dargestellten alternativen Ausführung sind Rohre und Querstege einstückig aus Carbon gefertigt.

In einer nicht dargestellten alternativen Ausführung sind die beiden Rohre der Stütze 4 nicht parallel, sondern so an der Bagauflage 2 befestigt, dass sie wenigstens in einer Fahrposition, wie sie in Fig. 1, 2 gezeigt ist, trapezförmig angeordnet sind, wobei ihre unteren, dem Achshalter 3 zugewandten Enden einen größeren horizontalen Abstand aufweisen als ihre entgegengesetzten Enden. Hierzu können die beiden Rohre der Stütze 4 entweder dauernd, i.e. auch in einer in Fig. 3 dargestellten Ruheposition trapezförmig angeordnet sein oder sich in an sich von sogenannten Tragebags bekannter Weise aus einer parallelen Ruhe- in eine trapezförmige Fahrstellung entfalten. Hierzu können beispielsweise die in Fig. 2 gezeigten Bolzen entsprechend aus der Bildebene herausragend angeordnet sein. Falls sich die Rohre der Stütze 4 aus einer parallelen in eine Trapezposition entfalten, kann der Quersteg als faltbares oder elastisches Band ausgebildet sein, das in Ruhestellung zusammengefaltet oder -zogen und in Fahrposition auseinandergefaltet bzw. -spannt wird.

Die Stütze 4 weist an ihrem unteren, der Bagauflagen abgewandten Ende Stützelemente 4c auf, die in der Fahrstellung sie Achsvorrichtung 5 gegen ein Zurückklappen abstützen. Bevorzugt umgreifen diese Stützelemente die beispielsweise rohrförmige Achsvorrichtung teilweise. Vorteilhafterweise können die Stützelemente 4c an der Achsvorrichtung 5 lösbar befestigt werden, etwa mittels Permanentmagneten, Klammern, Schrauben oder dergleichen (nicht dargestellt).

An ihrem oberen, der Bagauflage 2 zugewandten Ende ist die Stütze 4 an der Bagauflage 2 gelenkig derart befestigt, dass sie in eine im wesentlichen zur Bagauflage parallelen Ruhestellung (Fig. 3) und in eine Fahrstellung (Fig. 1, 2) gebracht werden kann, in der sie einen Winkel mit der Bagauflage 2 bildet und die Achsvorrichtung 5 abstützt. Achshalter 3, Stütze 4 und der Teil der Bagauflage 2 zwischen den Gelenken 3a bzw. 4a des Achshalters 3 bzw. der Stütze 4 bilden somit in der Fahrstellung ein stabiles Dreieck, das in der Achsvorrichtung 5 geschlossen ist.

Der Golfcaddy gemäß der hier dargestellten Ausführung umfasst weiters einen Griff 6 mit einem Henkel 6a und einer daran befestigten Stange 6b, die in dem oberen Abstandshalter 2a axial verschieblich ist und in diesem axial festgelegt werden kann, etwa mittels eines von Fahrradsattelstützen bekannten Schnellspanners (nicht dargestellt). Vorteilhafterweise ist die Stange 6b rohrförmig mit einem Innendurchmesser, der größer als der Außendurchmesser der Achsen 5r. 5l der Achsvorrichtung 5 ist, so dass die Achse teilweise in der Stange 6b aufnehmbar ist.

Wie vorstehend ausgeführt umfasst der Golfcaddy gemäß einer Ausführung der vorliegenden Erfindung zwei Stellungen, eine Fahrstellung (Fig. 1, 2) und eine Ruhestellung (Fig. 3):

In der Fahrstellung sind Achshalter 3 und Stütze 4 derart von der Bagauflage 2 weggeklappt, dass sie zusammen ein Dreieck bilden. Die Achsvorrichtung 5 ist senkrecht zu dem Achshalter 3 gedreht, wobei sich das Stützelement 4c der Stütze 4 auf der Achsvorrichtung 5 abstützt und diese in ihrer Stellung arretiert. An den Achsen 5r, 5l der Achsvorrichtung sind die Räder 7 befestigt. Der Griff 6 ist axial ausgezogen und axial fixiert. In dieser Fahrstellung kann der Caddy wie ein herkömmlicher Caddy bedient werden.

In der Ruhestellung sind Achshalter 3 und Stütze 4 derart an die Bagauflage 2 geklappt, dass sie im wesentlichen parallel liegen. Vorteilhaft ruht der Bag 100 auf den Abstandshaltern 2a, 2b derart, dass zwischen Bag 100 und Bagauflage 2 Raum für Teile von Achshalter 3, Stütze 4 und/oder Achsvorrichtung 5 vorhanden ist.

"Im wesentlichen parallel" umfasst, wie in Fig. 3 gezeigt, Stellungen, in denen Bagauflage 2 und Achshalter 3 bzw. Stütze 4 bauraumbedingt Winkel einschließen, die nicht näherungsweise gleich Null sind. Als "im wesentlichen parallel" soll hier auch jede Stellung verstanden werden, in der Achshalter 3 und Stütze 4 an die Bagauflage herangeklappt sind, so dass sie von dieser nur wenig nach außen hervorstehen.

Die Räder 7 sind von den Achsen 5r, 5l der Achsvorrichtung gelöst. Um eine einfache Möglichkeit der Demontage der Räder 7 von den Achsen 5r, 5l zu schaffen, kann an dem Achshalter 3 eine nicht näher dargestellte Stütze schwenkbar angebracht sein mit einem Schwenkpunkt etwa auf Höhe der Achsen 5r, 5l. Zur Demontage der Räder 7 wird die Stütze am Schwenkpunkt verschwenkt derart, dass sie mit dem Achshalter einen Winkel von etwa 90 Grad einschließt und sich das Caddy über die Stütze und einen Auflagepunkt, beispielsweise das Drehgelenk 3a am Boden abstützt und die Räder 7 frei sind, also nicht mehr am Boden aufliegen. Damit können die Räder leicht abgenommen werden. Die Stütze kann, wenn sie zur Montage oder Demontage der Räder 7 nicht benötigt wird, am Schwenkpunkt so verschwenkt werden, dass sie am Achshalter 3 aufliegt.

Die Achsvorrichtung 5 ist parallel zu dem Achshalter 3 gedreht. Der Griff 6 ist axial zum unteren Ende der Bagauflage 2 hin eingeschoben und axial fixiert. Dabei greift eine der beiden Achsen 5l in das Rohr 6b des Griffs 6 ein, so dass die Achsvorrichtung 5 drehfestgelegt ist. In dieser Ruhestellung kann der Caddy zusammen mit dem Bag leicht transportiert werden, da die radiale Abmessung des Bags kaum vergrößert ist.

Obwohl Bagauflage 2 als auch Stütze 4 in der hier dargestellten Ausführung jeweils zwei Rohren umfassen, können Bagauflage und/oder Stütze 4 auch einachsig, i.e. als ein Rohr ausgebildet sein.

In einer besonders bevorzugten Ausführung ist die Achsvorrichtung 5 an dem Achshalter 3 drehbar und lösbar befestigt. Die oben beschriebene manuelle Achsvorrichtung kann dann leicht gegen eine im wesentlichen baugleiche motorische Achsvorrichtung ausgetauscht werden. In einer ersten Ausführung einer solchen motorischen Achsvorrichtung wird eine durchgehende Welle von einem Elektromotor angetrieben, auf der die Räder 7 drehfestgelegt werden. In einer bevorzugten zweiten Ausführung der motorischen Achsvorrichtung sind zwei Elektromotoren in der rohrförmigen Achsvorrichtung 5 aufgenommen und treiben je eine Welle 5r bzw. 5l an, auf der je ein Rad 7 drehfestgelegt ist. Kraftübertragung mittels Getriebe, Energieversorgung mittels Akkumulatoren und/oder Solarzellen und Ansteuerung des bzw. der Motoren bezüglich Drehrichtung, Geschwindigkeit bzw. Drehmoment können in an sich von sogenannten Elektrocaddies bekannter Weise erfolgen, wobei zur Sicherstellung der Modularität des erfindungsgemäßen Golfcaddies eine Steuereinheit für den bzw. die Motoren mittels Draht oder auch drahtlos, beispielsweise über Funk- oder Infrarotsignale mit den Motoren kommuniziert. In der bevorzugten zweiten Ausführung mit zwei Motoren ist es darüber hinaus durch entsprechende Geschwindigkeitsunterschiede (größen- und/oder vorzeichenmäßig) möglich, Kurven zu fahren.

Hinsichtlich vorstehend im einzelnen nicht näher erläuterter Merkmale der Erfindung wird in übrigen ausdrücklich auf die Patentansprüche und die Zeichnung verwiesen.

## Patentansprüche

1. Golfcaddy mit einem Rahmen (1), der umfasst:
eine Bagauflage (2);
einen Achshalter (3) mit einer Achsvorrichtung (5);
eine Stütze (4); und
einen Griff (6);
wobei der Achshalter (3) und die Stütze (4) an der Bagauflage (2) und die Achsvorrichtung (5) an dem Achshalter (3) drehbar derart befestigt sind, dass sie aus einer Ruhestellung, in der Achshalter (3), Stütze (4), Achsvorrichtung (5) und Bagauflage (2) im wesentlichen parallel liegen,
in eine Fahrstellung klappbar sind, in der Achshalter (3), Stütze (4) und ein Teil der Bagauflage (2) im wesentlichen ein Dreieck bilden, und die Achsvorrichtung (5) in wesentlichen senkrecht zu dem Achshalter (3) steht und durch die Stütze (4) gestützt wird.

2. Golfcaddy nach Anspruch 1, **dadurch gekennzeichnet, dass** die Bagauflage Abstandshalter (2a, 2b) umfasst, die so ausgebildet sind, dass an ihnen ein Bag so befestigbar ist, dass Achshalter (3), Stütze (4) und Achsvorrichtung (5) in die Ruhestellung bringbar sind, während der Bag an der Bagauflage (2) befestigt ist.

3. Golfcaddy nach einem der vorhergehenden Ansprüche, **dadurch gekennzeichnet, dass** die Stütze ein Stützelement (4c) umfasst, an dem die Achsvorrichtung (5) befestigbar ist.

4. Golfcaddy nach einem der vorhergehenden Ansprüche, **dadurch gekennzeichnet, dass** die Achsvorrichtung (5) lösbar an dem Achshalter (3) befestigt ist.

5. Golfcaddy nach einem der vorhergehenden Ansprüche, **dadurch gekennzeichnet, dass** die Achsvorrichtung wenigstens einen Elektromotor zum Antreiben einer Welle (5r, 5l) und eine Steuereinheit für den Motor umfasst.

6. Golfcaddy nach Anspruch 5, **dadurch gekennzeichnet, dass** die Achsvorrichtung zwei Elektromotoren zum Antreiben von zwei Wellen (5r, 5l) und eine Steuereinheit für beide Motoren umfasst.

7. Golfcaddy nach einem der vorhergehenden Ansprüche, **dadurch gekennzeichnet, dass** die Achsvorrichtung (5) auf dem Achshalter (3) in der Ruhe- und/oder Fahrstellung drehfest arretierbar ist.

8. Golfcaddy nach einem der vorhergehenden Ansprüche, **dadurch gekennzeichnet, dass** die Achsvorrichtung wenigstens eine Achse oder Welle (5r, 5l) umfasst, an der wenigstens ein Rad (7) lösbar befestigbar ist, wobei sich die Welle in der Achsvorrichtung und/oder das Rad auf der Achse bzw. Welle drehen kann.

9. Golfcaddy nach Anspruch 8 , **dadurch gekennzeichnet, dass** der Griff ein Rohr (6b) umfasst, das axial verschieblich und arretierbar an der Bagauflage (2) so angeordnet ist, dass es in der Ruhestellung einen Teil der Achse bzw. Welle aufnimmt und die Achsvorrichtung so drehfestlegt.

10. Golfcaddy nach einem der vorhergehenden Ansprüche, **dadurch gekennzeichnet, dass** Bagauflage (2), Achshalter (3), Stütze (4), Achsvorrichtung (5) und/oder Griff (6) wenigstens teilweise aus Carbon und/oder Aluminium gefertigt sind.

## Claims

1. Golf caddy with a frame (1), comprising:
a bag support (2);
an axle mount (3) with an axle device (5);
a strut (4); and
a handle (6);
the axle mount (3) and the strut (4) being rotatably secured to the bag support (2) and the axle device (5) being rotatably secured to the axle mount (3) in such a way that they can be folded from a non-operating position in which the axle mount (3), strut (4), axle device (5) and bag support (2) lie essentially parallel into a travel position in which the axle holder (3), strut (4) and a part of the bag support (2) essentially form a triangle, and the axle device (5) sits essentially perpendicular to the axle mount (3) and is supported by the strut (4).

2. Golf caddy as claimed in claim 1, **characterised in that** the bag support incorporates spacers (2a, 2b) which are designed such that a bag can be attached to them to enable the axle mount (3), strut (4) and axle device (5) to be moved into the non-operating position whilst the bag is secured to the bag support (2).

3. Golf caddy as claimed in one of the preceding claims, **characterised in that** the strut has a strut element (4c) to which the axle device (5) can be attached.

4. Golf caddy as claimed in one of the preceding claims, **characterised in that** the axle device (5) is releasably secured to the axle mount (3).

5. Golf caddy as claimed in one of the preceding claims, **characterised in that** the axle device has at least one electric motor for driving a shaft (5r, 51) and a control unit for the motor.

6. Golf caddy as claimed in claim 5, **characterised in that** the axle device has two electric motors for driving two shafts (5r, 51) and a control unit for both motors.

7. Golf caddy as claimed in one of the preceding claims, **characterised in that** the axle device (5) can be locked on the axle mount (3) to prevent it from rotating in the non-operating and/or travel position.

8. Golf caddy as claimed in one of the preceding claims, **characterised in that** the axle device has at least one axle or shaft (5r, 5l) to which at least one wheel (7) can be releasably attached, and the shaft is able to rotate in the axle device and/or the wheel is able to rotate on the axle or shaft.

9. Golf caddy as claimed in claim 8, **characterised in that** the handle is a tube (6b), disposed so that it can be axially displaced and locked on the bag support (2) so that it accommodates a part of the axle or shaft in the non-operating position, thereby preventing the axle device from rotating.

10. Golf caddy as claimed in one of the preceding claims, **characterised in that** the bag support (2), axle mount (3), strut (4), axle device (5) and/or handle (6) are at least partially made from carbon and/or aluminium.

## Revendications

1. Caddie de golf avec un cadre (1) qui comprend :
un support de sac (2) ;
un support d'essieu (3) avec un dispositif d'essieu (5) ;
un appui (4) ; et
une poignée (6) ;
le support d'essieu (3) et l'appui (4) étant fixés au support de sac (2) et le dispositif d'essieu (5) au support d'essieu (3) de façon à pouvoir tourner de telle manière qu'ils peuvent être rabattus d'une position de repos, dans laquelle le support d'essieu (3), l'appui (4), le dispositif d'essieu (5) et le support de sac (2) sont essentiellement parallèles à une position de roulement dans laquelle le support d'essieu (3), l'appui (4) et une partie du support de sac (2) forment essentiellement un triangle et que le dispositif d'essieu (5) est essentiellement perpendiculaire au support d'essieu (3) et étayé par l'appui (4).

2. Caddie de golf selon la revendication 1, **caractérisé en ce que** le support de sac comprend des écarteurs (2a, 2b) qui sont réalisés de telle manière qu'un sac peut y être fixé, que le support d'essieu (3), l'appui (4) et le dispositif d'essieu (5) peuvent être mis en position de repos pendant que le sac est fixé sur le support de sac (2).

3. Caddie de golf selon une des revendications précédentes, **caractérisé en ce que** l'appui comprend un élément d'appui (4c) sur lequel le dispositif d'essieu (5) peut être fixé.

4. Caddie de golf selon une des revendications précédentes, **caractérisé en ce que** le dispositif d'essieu (5) est fixé de manière amovible sur le support d'essieu (3).

5. Caddie de golf selon une des revendications précédentes, **caractérisé en ce que** le dispositif d'essieu comprend au moins un moteur électrique pour entraîner un arbre (5r, 51) et une unité de commande pour le moteur.

6. Caddie de golf selon la revendication 5, **caractérisé en ce que** le dispositif d'essieu comprend deux moteurs électriques pour entraîner deux arbres (5r, 51) et une unité de commande pour les deux moteurs.

7. Caddie de golf selon une des revendications précédentes, **caractérisé en ce que** le dispositif d'essieu (5) peut être arrêté sur le support d'essieu (3) en position de repos et/ou de roulement de manière à résister à la torsion.

8. Caddie de golf selon une des revendications précédentes, **caractérisé en ce que** le dispositif d'essieu comprend au moins un essieu ou un arbre (5r, 5l) sur lequel au moins une roue (7) peut être fixée de manière amovible, l'arbre pouvant tourner dans le dispositif d'essieu et/ou la roue pouvant tourner sur l'essieu et/ou l'arbre.

9. Caddie de golf selon la revendication 8, **caractérisé en ce que** la poignée comprend un tube (6b) qui est disposé sur le support de sac (2) de manière à pouvoir être déplacé axialement et arrêté de telle manière qu'en position de repos il accueille une partie de l'essieu et/ou de l'arbre et fixe ainsi le dispositif d'essieu de manière à ce qu'il résiste à la torsion.

10. Caddie de golf selon une des revendications précédentes, **caractérisé en ce que** le support de sac (2), le support d'essieu (3), l'appui (4), le dispositif d'essieu (5) et/ou la poignée (6) sont fabriqués au moins en partie en carbone et/ou en aluminium
